# DEMANDE DE BREVET EUROPEEN

(11) **EP 2 270 948 A1**
(43) Date de publication de la demande: **05.01.2011**
(21) Numéro de dépôt: 10167606.2
(22) Date de dépôt: 29.06.2010
(51) Int. Cl.: H02J 3/14, H02J 13/00

(54) **Procédé et dispositif d'effacement et d'anticipation de la consommation électrique chez des abonnés**

(30) Priorité: 29.06.2009 FR 0954406
(71) Demandeur: Delta Dore, 35270 Bonnemain (FR)
(72) Inventeur: Raffray, Patrick, 35120 Hirel (FR)
(74) Mandataire: Maillet, Alain

(57) **Abrégé**

La présente invention concerne un procédé et dispositif d'effacement et d'anticipation de la consommation d'une installation électrique (S) d'un abonné au cours duquel les appareils électriques (A1, A2) de l'installation sont délestés selon des informations de pilotage (ISOUSCR) délivrées par un compteur électrique (CO). Le procédé est **caractérisé en ce que** suite à la réception d'une nouvelle consigne (C), au moins l'une desdites informations de pilotage (ISOUSCR) est modifiée de manière à respecter ladite consigne (C).

## Description

La présente invention concerne un procédé et dispositif d'effacement et d'anticipation de la consommation électrique chez des abonnés.

Les distributeurs d'énergie électrique, tels que par exemple Electricité de France (EDF), ont une gamme de compteurs électroniques qui intègrent des options tarifaires de plus en plus riches. Ces compteurs offrent, notamment, à un abonné la possibilité d'être informé en temps réel de la consommation électrique globale de son installation ainsi que celle de ses différents appareils domestiques. Ces compteurs comportent, également, une sortie d'informations numériques, appelée « sortie télé-informations client», à partir de laquelle sont diffusées en continu des informations relatives à leur installation. Ces informations, appelées habituellement télé-informations, regroupent des paramètres contractuels (abonnement et options choisis) et des mesures relatives à la consommation électrique instantanée de leur installation (intensité, avertissement de dépassement de puissance souscrite, etc).

Les abonnés ont également la possibilité de doter leurs installations électriques d'un système de gestion locale de l'énergie totale qu'il consomme. En particulier, ces systèmes permettent à un abonné de pouvoir programmer des usages pendant les heures creuses/pleines, de visualiser leur consommation instantanée, mais également de pouvoir délester certains de leurs appareils domestiques en fonction de certaines données télé-informations délivrées par le compteur électrique et qui seront par la suite appelées informations de pilotage. Ainsi, le délesteur coupe et/ou diminue la puissance de certains appareils domestiques lorsque les informations de pilotage indiquent que la consommation électrique instantanée est trop élevée par rapport à l'abonnement souscrit.

Toutefois, le délestage réalisé actuellement chez les abonnés n'est pas suffisant pour éviter, au niveau d'un réseau de distribution électrique, une augmentation importante et subite des demandes d'énergie qui se produit pendant les périodes de pointe et qui peut provoquer l'effondrement en tension ou en fréquence de la totalité du réseau de distribution si la production en électricité est insuffisante ou si la capacité d'acheminement de l'électricité est trop faible.

De plus, les moyens actuels de production massive d'électricité tels que les centrales nucléaires, ne peuvent réagir aux fortes variations (hausses ou baisses) de la demande en énergie. Ainsi, pendant les périodes de pointe, ces moyens doivent produire à leur maximum et ils ne peuvent réduire cette production pendant les périodes creuses, produisant alors de l'énergie excédentaire qu'il est nécessaire de consommer pour éviter tout incident du réseau de distribution.

Afin de résoudre ces problèmes de fluctuations de la consommation électrique, les distributeurs d'électricité proposent des offres commerciales dites d'effacement de la puissance électrique consommée. Par exemple, Electricité de France propose une offre dite EJP (Effacement Jour de Pointe) qui consiste à décourager l'utilisation d'électricité durant les jours où le réseau est le plus sollicité (à cause du froid notamment) par un prix surtaxé, en contrepartie d'une réduction assez importante le reste de l'année (http://www.edf-bleuciel.fr).

Le problème résolu par la présente invention est de permettre à un distributeur d'électricité d'agir directement sur le délestage mis en place chez l'abonné pour faciliter, d'une part, de limiter l'augmentation subite des demandes lors des périodes de pointe et d'utiliser la puissance excédentaire produite lors des périodes creuses.

A cet effet, la présente invention concerne un procédé d'effacement et d'anticipation de la consommation d'une installation électrique d'un abonné au cours duquel les appareils domestiques de l'installation sont délestés selon des informations de pilotage délivrées par un compteur électrique. Le procédé est caractérisé en ce que suite à la réception d'une consigne, lesdites informations de pilotage sont modifiées de manière à respecter ladite consigne.

Ainsi, un distributeur émet une consigne dont le contenu indique si la consommation de l'installation électrique d'abonné doit être réduite (pendant les heures de pointe) ou si l'installation électrique doit stocker de l'énergie dans l'habitation de l'abonné (pendant les heures creuses) par exemple en chauffant de l'eau sanitaire ou en actionnant des moyens de chauffage à forte inertie (mur, plancher....). Lorsqu'une consigne est émise par un distributeur à destination d'un abonné (en pratique, cette consigne est diffusée pour plusieurs abonnés localisés sur une même zone géographique), les informations qui pilotent le délesteur de l'installation électrique de chacun de ces abonnés sont alors modifiées pour qu'elles respectent cette consigne. L'un des avantages du procédé est d'intervenir sur la consommation de l'abonné au plus près du compteur électrique ou du tableau électrique, ce qui évite l'installation de matériels à différents endroits de l'installation de cet abonné et donc limite le coût de modification d'une installation électrique existante.

Selon son aspect matériel, la présente invention concerne un dispositif et un système d'effacement et d'anticipation de la consommation d'une installation électrique prévu pour mettre en oeuvre le procédé.

La présente invention concerne, enfin, une installation électrique comprenant un dispositif d'effacement et d'anticipation.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
La Fig. 1 représente schématiquement un exemple d'une installation électrique selon l'état de la technique,
La Fig. 2 représente un exemple de trame portant des informations de pilotage,
La Fig. 3 représente un exemple d'installation électrique comprenant un dispositif d'effacement et d'anticipation selon un mode de réalisation, et
La Fig. 4 représente un exemple d'installation électrique comprenant un dispositif d'effacement et d'anticipation selon un mode de réalisation,

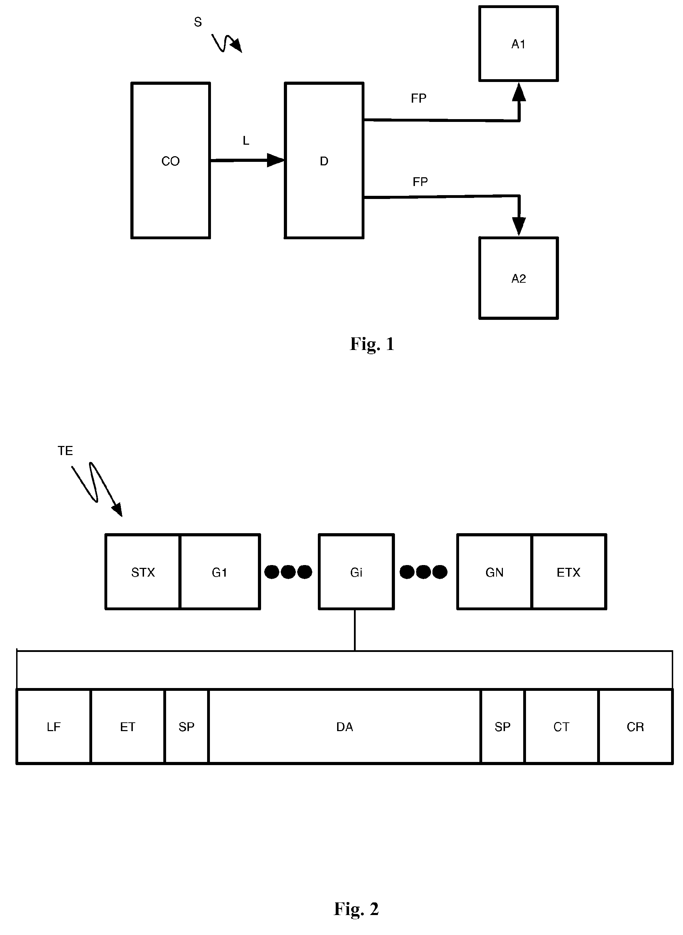

A la Fig. 1, est représentée schématiquement une installation électrique d'un abonné. L'installation électrique S comporte un compteur électrique CO, un délesteur D et deux appareils domestiques A1, A2 consommateurs d'électricité.

Bien entendu, l'installation représentée n'est qu'un exemple de réalisation car l'installation peut comporter plusieurs délesteurs D et plus de deux appareils domestiques par délesteur.

Le compteur électrique CO est de type électronique c'est-à-dire qu'il délivre au délesteur D des télé-informations portées par des trames TE de signaux numériques au travers d'une liaison filaire L.

La Fig. 2 représente un exemple d'une trame TE de signaux délivrés par le compteur électrique CO. Pour plus de détails, le lecteur pourra se référer à la spécification technique EDF n° HN 44-S-81 de Février 2006 intitulée « Sorties de télé-information client des appareils de comptage électroniques utilisés par le distributeur EDF » qui est accessible sur le site EDF ci-dessus.

La trame TE a une longueur qui dépend du type d'abonnement souscrit par l'abonné et contient toutes les informations présentes dans les mémoires du compteur et pouvant aider à la gestion d'énergie. La trame TE est ici donnée dans le cas où elle est émise par un compteur CO monophasé du tarif bleu (section 2.2 de la spécification sus-citée). D'autres types de trames peuvent bien entendu être utilisés.

La trame TE est constituée d'un premier caractère STX qui indique le début de la trame, du corps de la trame qui est composé de plusieurs groupes d'informations G1, ... ,Gi, ... , GN et d'un dernier caractère ETX qui indique la fin de la trame.

Toutes les données du compteur sont délivrées par groupes d'informations qui forment chacun un ensemble cohérent avec une étiquette ET et une valeur associée de telle sorte qu'il soit facile de les distinguer les unes des autres. La composition d'un groupe d'informations Gi est la suivante : un caractère LF qui indique le début du groupe, une étiquette ET dont la longueur est inférieure ou égale à huit caractères, un caractère SP qui sépare l'étiquette ET des données DA dont la longueur est variable, un caractère SP séparateur des données DA, d'un caractère de contrôle CT qui contient une "checksum" calculée sur l'ensemble des caractères allant du début de l'étiquette ET à la fin des données DA (caractère SP inclus) et un caractère CR qui indique la fin du groupe d'informations.

Des groupes d'informations définissent les paramètres contractuels qui dépendent de l'abonnement souscrit par l'abonné auprès du distributeur.

Par exemple, les options tarifaires constituent un groupe (groupe "OPTARIF") qui est codé sur 4 caractères alphanumériques selon la syntaxe suivante: BASE (Option Base), HC.. (Option Heures Creuses), EJP. (Option Effacement Jour de pointe) et BBRx (Option Tempo) . Lorsque l'option EJP est choisie, le préavis de période EJP (groupe "PEJP") est codé sur 2 caractères numériques. Sa valeur est fixe et vaut "30" indiquant ainsi qu'un signal est reçu par le compteur 30 minutes avant le début d'une période EJP.

Un autre groupe qui définit les paramètres contractuels porte sur la période tarifaire en cours (groupe "PTEC"). Ce groupe est codé sur 4 caractères alphanumériques selon la syntaxe suivante: TH.. (Toutes les Heures), HC.. (Heures Creuses), HP.. (Heures Pleines), HN.. (Heures Normales), PM.. (Heures de Pointe Mobile), HCJB (Heures Creuses Jours Bleus), HCJW (Heures Creuses Jours Blancs), HCJR (Heures Creuses Jours Rouges), HPJB (Heures Pleines Jours Bleus), HPJW (Heures Pleines Jours Blancs), HPJR (Heures Pleines Jours Rouges).

Un autre groupe qui définit les paramètres contractuels porte sur l'intensité maximale souscrite (groupe 'ISOUSCR') dont la valeur est définie selon l'abonnement souscrit. On peut noter que la puissance souscrite est liée à la valeur de l'intensité maximale souscrite étant donné que la tension délivrée est constante.

Les groupes d'informations définissent également des mesures relatives à la consommation instantanée de l'installation électrique tel que le groupe "ADPS" qui avertit du dépassement de la puissance souscrite, le groupe "IINST" qui définit la valeur de l'intensité efficace instantanée ou le groupe « IMAX » qui définit l'intensité maximale appelée.

Le délesteur D est prévu pour recevoir les trames TE à partir d'un bornier du compteur CO par la liaison filaire L.

Toutes les informations des trames TE ne sont pas utilisées par le délesteur D. Par exemple, le délestage des appareils A1 et A2 peut être piloté par l'intensité maximale souscrite (groupe 'ISOUSCR') et peut alors être comparé à l'intensité maximale appelée (groupe 'IMAX'). Dans le cas où l'intensité maximale appelée est supérieure à l'intensité maximale souscrite, le délesteur D applique une stratégie de délestage, préalablement définie selon des priorités associées aux appareils A1 et A2, par émission de commandes à destination de ces appareils. Par exemple, ces commandes, qui peuvent soit couper soit diminuer l'alimentation des appareils A1 et A2, sont émises par un fil pilote FP.

Selon l'exemple donné à la Fig. 1, les appareils A1 et A2 sont reliés au délesteur D par deux fils pilotes séparés. Toutefois, un même fil pilote peut acheminer les commandes pour ces deux appareils domestiques, voire pour un ensemble de plus de deux appareils domestiques et une même commande peut être appliquée à un ensemble d'appareils domestiques qui ont tous la même priorité en terme de consommation électrique.

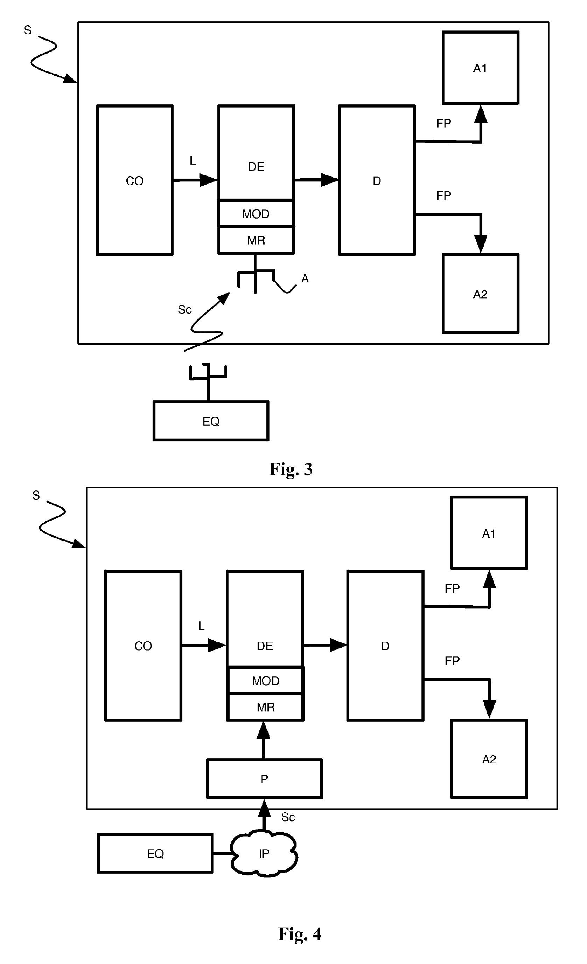

A la Fig. 3, l'installation électrique représentée à la Fig. 3 reprend la plupart des éléments de la Fig. 1. Les références de la Fig. 3 qui sont identiques aux références de la Fig. 1 désignent les mêmes éléments.

Toutefois, l'installation électrique de la Fig. 3 comporte, selon la présente invention, un dispositif DE d'effacement et d'anticipation de la consommation électrique.

Selon le mode de réalisation représenté, le dispositif DE est un appareil indépendant qui est branché en série entre le compteur CO et le délesteur D. La liaison L entre le compteur CO et le dispositif DE et celle entre ce dispositif DE et le délesteur D sont des liaisons filaires. Le dispositif DE est alimenté par branchement sur une prise électrique de l'installation électrique S. Selon une variante, le dispositif DE peut être alimenté par sa liaison filaire avec le compteur CO ou avec le délesteur D ou disposer d'une source d'énergie autonome.

Selon un autre mode de réalisation, le dispositif DE est intégré dans le délesteur D. Son alimentation peut alors être dérivée de celle du délesteur D.

Le dispositif DE comporte des moyens MR pour recevoir une consigne C.

Selon un mode de réalisation, les moyens MR sont des moyens radiofréquences connus qui permettent au dispositif DE, lorsqu'ils sont reliés à une antenne A, de recevoir par voie hertzienne des signaux Sc porteurs de la consigne C. Chaque signal Sc est émis par un équipement EQ qui est externe à l'installation de l'abonné S. Le signal Sc est soit émis uniquement pour l'installation S d'un abonné soit préférentiellement diffusé par cet équipement à un ensemble d'abonnés par exemple localisés dans une même zone géographique.

Selon un autre mode de réalisation, représenté à la Fig. 4, les moyens MR sont des moyens filaires ou tout autre type de réseau local (radio, courant porteur ....) qui permettent au dispositif DE de recevoir par un réseau de communication IP tel que Internet les signaux Sc. Pour cela, selon l'exemple de la Fig. 4, le dispositif DE est relié à un point d'accès P qui sert de passerelle entre le dispositif DE et le réseau IP. Ce point d'accès est par exemple une passerelle domestique.

Selon une variante, les moyens MR sont bi-directionnels, c'est-à-dire que le dispositif DE, en plus de recevoir les signaux Sc, peut émettre des signaux portant notamment un historique des effacements de la consommation électrique réalisés. Le canal montant, c'est-à-dire du dispositif DE vers l'équipement EQ, peut être réalisé par voie hertzienne (GSM, GPRS, UMTS, etc.) ou par voie filaire via le point d'accès P.

Le dispositif DE comporte également des moyens MOD pour modifier au moins l'une des informations délivrées par le compteur CO qui sont destinées à piloter le délesteur D.

Les moyens MR et MOD sont mis en oeuvre, par exemple, par un ensemble de composants électroniques incluant, notamment, un micro-processeur ou une mémoire programmée qui mettent en oeuvre le procédé d'effacement suivant.

Lorsque le dispositif DE reçoit un signal Sc, le dispositif DE extrait la consigne C portée par ce signal. Le dispositif DE détermine alors si les informations délivrées par le compteur DE, c'est-à-dire celles portées par des trames TE respectent la consigne C qui peut indiquer un pourcentage CP de réduction ou d'augmentation à appliquer à la puissance électrique maximale souscrite ou indiquer une valeur maximale ou minimale de cette puissance.

Suite à la réception d'une consigne C, le dispositif DE modifie alors au moins l'une des informations qui sont délivrées par le compteur CO et qui sont destinées à piloter le délesteur D de manière à ce que la consigne C soit respectée.

Selon un mode de réalisation, la modification est appliquée tant qu'une autre consigne n'est pas reçue.

Selon un autre mode de réalisation, la consigne C indique également une durée de temps DT pendant laquelle la consommation électrique de l'installation S doit respecter la consigne C. Au-delà de cette consigne, le délesteur D ne modifie plus les informations délivrées par le compteur CO et le délesteur D est alors piloté par ces informations non modifiées.

Selon un mode de réalisation, la consigne C est mémorisée permettant ainsi la création d'un historique des périodes d'effacement.

En reprenant l'exemple de la Fig. 1, dans lequel le délesteur D est piloté par l'intensité maximale souscrite (groupe 'ISOUSCR'), admettons que la consigne C comporte une valeur CP égale à 50% de la puissance maximale souscrite. Le dispositif DE remplace alors la valeur de l'intensité maximale souscrite portée jusque là par les trames TE par une nouvelle valeur d'intensité égale ici à la moitié de la valeur souscrite de cette intensité.

Ainsi, le délestage va être réalisé par comparaison de l'intensité maximale souscrite modifiée avec l'intensité maximale appelée au lieu de continuer à piloter ce délestage à partir de l'intensité maximale souscrite délivrée par le compteur électrique CO. La consigne C est alors respectée et l'installation électrique participe alors au délestage global du réseau de distribution, c'est-à-dire que l'installation favorise la régulation des demandes lors de périodes de pointe. De plus, il est important de reconstruire le signal (appelé ADPS) à partir de cette nouvelle consigne de manière à conserver la compatibilité avec les délesteurs qui n'utilisent que cette donnée.

Admettons maintenant que la consigne C comporte une valeur CP égale à 110% de la puissance maximale souscrite. Le dispositif DE remplace alors la valeur de l'intensité maximale souscrite portée jusque là par les trames TE par une nouvelle valeur d'intensité ici supérieure (de 10%) à la valeur souscrite de cette intensité.

Ainsi, le délestage va être réalisé par comparaison de l'intensité maximale souscrite modifiée avec l'intensité maximale appelée au lieu de continuer à piloter ce délestage à partir de l'intensité maximale souscrite délivrée par le compteur électrique CO. La consigne C est alors respectée et l'installation électrique participe à utiliser la production d'électricité excédentaire par stockage de l'énergie électrique en vue d'une utilisation ultérieure.

Il est également envisageable d'anticiper les ordres de la programmation des périodes d'occupation pour limiter l'amplitude des périodes de pointes et contribuer de ce fait au lissage de la courbe de charge.

## Revendications

1. Procédé d'effacement et d'anticipation de la consommation d'une installation électrique (S) d'un abonné au cours duquel les appareils électriques (A1, A2) de l'installation sont délestés selon des informations de pilotage (ISOUSCR, ADPS) délivrées par un compteur électrique (CO), **caractérisé en ce que** suite à la réception d'une nouvelle consigne (C), au moins l'une desdites informations de pilotage (ISOUSCR et ,ou ADPS) sont modifiées de manière à respecter ladite consigne (C).

2. Procédé selon la revendication 1, dans lequel la consigne (C) définit, en outre, une durée de temps (DT) pendant laquelle la consommation électrique de l'installation S doit respecter la consigne (C).

3. Procédé selon l'une des revendications précédentes, dans lequel la consigne (C) comporte, en outre, une valeur de pourcentage (Cp) de la réduction ou d'augmentation à appliquer à la puissance électrique maximale souscrite.

4. Procédé selon l'une des revendications précédentes, dans lequel la consigne (C) comporte, en outre, une valeur maximale ou minimale de la puissance maximale souscrite.

5. Procédé selon l'une des revendications précédentes, dans lequel la consigne est obtenue par des moyens de communications de type filaires ou radiofréquences.

6. Procédé selon l'une des revendications précédentes, dans lequel la consigne reçue (C) est mémorisée.

7. Dispositif (DE) d'effacement et d'anticipation de la consommation d'une installation électrique d'un abonné dont les appareils électriques sont délestés selon des informations de pilotage délivrées par un compteur électrique (CO), **caractérisé en ce qu'**il comporte des moyens (MR) pour recevoir une consigne (C), et des moyens (MOD) pour modifier au moins l'une des informations de pilotage.

8. Dispositif selon la revendication 7, dans lequel les moyens (MR) pour recevoir une consigne (C) sont des moyens radiofréquences.

9. Dispositif selon la revendication 7, dans lequel les moyens (MR) pour recevoir une consigne (C) comportent un point d'accès (P) relié, d'une part, audit dispositif et, d'autre part, à un équipement externe à l'installation électrique (S) via un réseau de communication.

10. Dispositif selon l'une des revendications 7 à 9, dans lequel les moyens (MR) pour recevoir une consigne (C) permettent également d'émettre des signaux.

11. Système d'effacement et d'anticipation de la consommation d'une installation électrique d'un abonné dont les appareils électriques sont délestés selon des informations de pilotage délivrées par un compteur électrique (CO), **caractérisé en ce qu'**il comporte un dispositif (DE) conforme à l'une des revendications 7 à 9 et un équipement (EQ) externe à l'installation qui émet ou diffuse un signal (Sc) porteur d'une consigne (C).

12. Installation électrique chez un abonné comprenant des appareils électriques délestés selon des informations de pilotage délivrées par un compteur électrique (CO), **caractérisée en ce qu'**elle comporte au moins un dispositif (DE) conforme à l'une des revendications 7 à 9 qui est branché en série avec le compteur électrique (CO).

13. Installation électrique selon la revendication 12, dans lequel le dispositif (DE) est branché entre le compteur électrique (CO) et un délesteur (D) mettant en oeuvre ledit délestage.
